# EUROPEAN PATENT SPECIFICATION

(11) **EP 4 431 931 B1**
(45) Date of publication and mention of the grant of the patent: **26.02.2025**
(21) Application number: 24163510.1
(22) Date of filing: 14.03.2024
(51) Int. Cl.: G01N 27/48

(54) **METHOD OF CHANGING THE POTENTIAL VALUE DURING AN ELECTROCHEMICAL MEASUREMENT**
VERFAHREN ZUR ÄNDERUNG DES POTENTIALWERTES BEI EINER ELEKTROCHEMISCHEN MESSUNG
PROCÉDÉ DE MODIFICATION DE LA VALEUR DE POTENTIEL LORS D'UNE MESURE ÉLECTROCHIMIQUE

(30) Priority: 15.03.2023 PL 44408523
(43) Date of publication of application: 18.09.2024
(73) Proprietor: Uniwersytet Lodzki, 90-136 Lodz (PL)
(72) Inventor: Smarzewska, Sylwia, 94-058 Lodz (PL); Guziejewski, Dariusz, 94-054 Lodz (PL); Micherski, Valentin, 90-136 Lodz (PL)
(74) Representative: Kicinska-Fujawa, Alicja

(56) References cited:
- CN-A- 1 740 783
- SHAO-PING DENG ET AL: "A Virtual Smart Tongue for Multifrequency Large Amplitude Pulse Voltammetry", INTELLIGENT SYSTEMS, 2009. GCIS '09. WRI GLOBAL CONGRESS ON, IEEE, PISCATAWAY, NJ, USA, 19 May 2009 (2009-05-19), pages 8 - 13, XP031516093, ISBN: 978-0-7695-3571-5
- STOJANOV LEON ET AL: "Multi-frequency analysis in a single square-wave chronoamperometric experiment", ELECTROCHEMISTRY COMMUNICATIONS, vol. 124, 1 March 2021 (2021-03-01), NL, pages 1 - 6, XP093147389, ISSN: 1388-2481, DOI: 10.1016/j.elecom.2021.106943

## Description

The object of the invention is a method of changing the potential value during an electrochemical measurement as defined in claim 1.

In the method described in Electrochemical Faradaic Spectroscopy (ChemElectroChem, 2018, 5, 187-194*),* the authors used multiple, alternating applications of two fixed potential values, with a square waveform, at a predefined frequency. The potential values are set relative to the formal potential of the redox reaction that is being characterised in the course of the experiment so designed. The frequency with which the potential values are changed depends on the duration of the application of the potential value and is constant throughout the measurement. The current flowing through the circuit is measured each time at the end of the application of the potential. In this way, the forward values, the backward values and their difference (the resulting net current) are obtained. The number of cycles (series of two adjacent potentials) is not fixed. The end result of the measurement is the dependence of the measured current values as a function of the number of cycle changes or the duration of the experiment.

In another example presented in Multi-frequency analysis in a single square-wave chronoamperometric experiment (Electrochem. Commun., 2021, 124, 106943*),* the inventors used the analogous principle of alternating the application of the potential with a constant potential difference and a square waveform. In this case, however, the principle of changing frequency values during a single measurement was applied. This means that two adjacent pulses of potential (a single cycle) have the same duration, while successive cycles are already assigned different, predefined frequency values. The current flowing through the circuit is measured each time at the end of the application of the potential. In this way, the forward values, the backward values and their difference (the resulting net current) are obtained. The number of cycles (series of two adjacent potentials) is not fixed. The end result of the measurement is the dependence of the measured current values as a function of the number of cycle changes or the duration of the experiment.

In another case presented in Electrode kinetics from a single experiment: Multi-amplitude analysis in square-wave chronoamperometry; (Physical Chemistry Chemical Physics, (2022), 24, 24419-24428*)* the authors presented a modified method of measurement based on the reapplication of alternating potential values, this time with a fixed duration for each pulse, but varying the potential values in a predefined way. The current flowing through the circuit is measured each time at the end of the application of the potential. In this way, the forward values, the backward values and their difference (the resulting net current)) are obtained. The number of cycles (series of two adjacent potentials) is not fixed. The end result of the measurement is the dependence of the measured current values as a function of the number of shift cycles or the duration of the experiment.

CN 1740783 A discloses a solution analysis method including the following steps: applying a pulse scanning signal modulated by various constant-frequency amplitude modulation or amplitude frequency to a reference electrode and working electrode , detecting the response current signal on an auxiliary electrode to obtain the frequency-amplitude response spectrum, and analysing and processing said spectrum to obtain the result of solution characteristics.

The object of the invention is a method of changing the potential when conducting an electrochemical measurement using predefined, variable potential valuesas defined in claim 1. The method is based on the fact that in the first cycle of changing the potential value, the first potential is applied to the working electrode with the value of the formal potential of the tested redox system increased by a value of the first of the series of amplitudes. The duration of the first applied potential results from the first of the series of frequencies applied, while the value of the second return pulse results from the potential reduced by the value of the first of the series of amplitudes Then, in the second cycle of change, the value of the potential is changed analogously, but the value of the amplitude used is another of the series, while the change of the duration of the application of the potential is based on the next series of frequency values, in the next stage successive cycles of potential changes are realized analogously exhausting the previously planned series of values of amplitude and frequency. The number of positions in the series is not predefined, and the current flowing through the circuit is measured each time at the end of the duration of the applied potential values.

The principle of changing the values of these potentials is based on the simultaneous application of both changing amplitude and frequency values of the square wave. In this way, a single pair of applied potentials, the change cycle, receives one pair of frequency, duration and amplitude values, which is the difference between the applied value and the output value - determined in relation to the value of the formal potential of the redox reaction, which is subjected to characterization in such a designed measurement. In this way, the forward values, the backward values and their difference (the resulting net current) are obtained. The number of cycles, a series of two adjacent potentials, is not fixed. The end result of the measurement is the dependence of the measured current values as a function of the number of shift cycles or the duration of the experiment.

The advantage of the method according to the invention is that current values relevant only for the characterised substances are obtained, which is due to the fact that the applied potential values are changed within the influence of the electroactive substance on the recorded current close to the value of the formal potential of the given redox reaction.

The advantage of the method according to the invention is also the simultaneous influence on the recorded signal through the amplitude and frequency values changing at the same time, as parameters that provide the possibility of characterizing and differentiating the substances analysed in the measurement. The electrochemical characterisation of the substance under analysis, in terms of the electrode reaction mechanism and its kinetics, can be carried out in a single measurement, which is highly cost- and time-efficient compared with electrochemical characterisation methods known in the literature, such as cyclic voltammetry (CV) or square wave voltammetry (SWV).

An additional advantage of the method according to the invention is the use of a simultaneous change in the values of the characterizing parameters, i.e. the amplitude and frequency of a square wave in an electrochemical measurement based on the principles described for the method called electrochemical Faradaic spectroscopy. This allows interaction with the redox system under analysis through two independent parameters. In this way, it is possible to characterise the mechanism and kinetics of the electrode reaction in a single measurement, as both amplitude and frequency are triggers for the interaction of the measurement method with the redox system under analysis. None of the electrochemical analysis methods known so far allow the use of variable values of critical parameters during a single measurement.

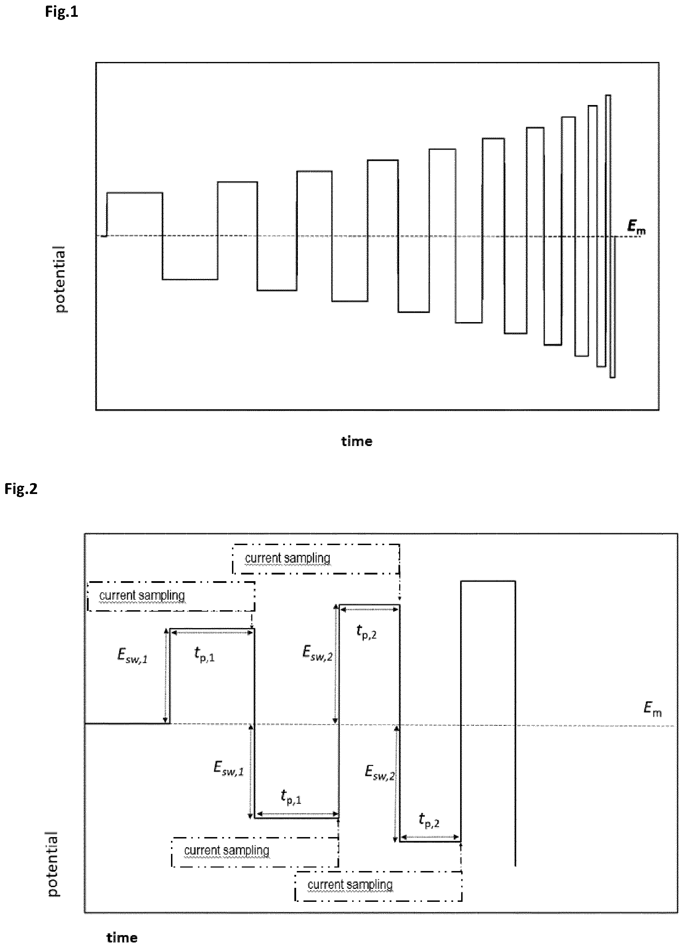

The invention is illustrated in embodiments and figures, where fig. 1 shows a general diagram of the changes of the potential value throughout a single measurement and in fig. 2, which shows the parameters characterising the amplitude *E*_{sw}, the frequency *ƒ*=1/2*t*ₚ and the moment of registration of the flowing current (forward and backward, the resulting net value being the difference from adjacent pulses *n* and *n*+1 respectively).

### Embodiment 1

The assumed series of amplitude values are: 10, 20, 30, 40, 50, 60, 70, 80, 90 and 100 mV, while the series of frequency values are: 10, 15, 20, 30, 40, 50, 75, 100, 150 and 200 Hz. A potential (*E*ₘ) was applied to the working electrode, with the value of the formal potential of the tested redox system increased by a value of the first of the series of amplitudes, i.e. 10 mV. The duration of the applied potential is derived from the first of a series of applied frequencies, i.e. 10 Hz. The value of the potential in the second (return) pulse results from the potential (*E*ₘ) minus the value of the first in the amplitude series, i.e. 10 mV. This represents the first cycle of potential change. In the second cycle of changes, the value of the potential is changed in a similar manner, but the value of the amplitude used is the next in the series, i.e. 20 mV, while the change in the duration of application of the potential is based on the next in the series of frequency values, changed according to the series given above. Subsequent cycles of potential change were carried out in an analogous manner exhausting a pre-planned range of amplitude and frequency values. The number of positions in the ranks is not predefined. The current flowing through the circuit was measured each time at the end of the applied potential values.

### Embodiment 2

As in example 1, except that the frequency value is changed in a differently defined manner, e.g. every 0.1 on a logarithmic scale and similarly for the amplitude value, e.g. every 20 mV.

## Claims

1. Method of changing the potential value during the electrochemical measurement, wherein in the first cycle of changing the potential value, the first potential value of a formal potential of the tested redox system is applied to the working electrode increased by a value of the first of the series of amplitudes, the duration of the first applied potential results from the first of the series of frequencies applied, the value of the second return pulse results from the potential reduced by the value of the first of the series of amplitudes, then in the second cycle of change, the value of the potential is changed analogously, but the value of the amplitude used is another of the series, while the change of the duration of the application of the potential is based on the next series of frequency values, in the next stage successive cycles of potential changes are realized analogously exhausting the previously planned series of values of amplitude and frequency, the intensity of the current flowing through the circuit is measured each time at the end of the duration of the applied values of the potential, wherein the amplitude values are selected from the range 5-250 mV and the frequency values are selected from the range 1-1000 Hz, and wherein the first value taken from those ranges are most preferably lowest or highest one, the number of cycles is from 5 to 1000, most preferably 50 and the range order is ascending or descending, independently of each other.

## Patentansprüche

1. Verfahren zur Änderung des Potentialwerts während der elektrochemischen Messung, wobei im ersten Zyklus der Änderung des Potentialwerts der erste Potentialwert eines Formpotentials des getesteten Redoxsystems an die Arbeitselektrode angelegt wird, erhöht um einen Wert der ersten der Reihe von Amplituden, die Dauer des ersten angelegten Potentials sich aus der ersten der Reihe von angelegten Frequenzen ergibt, der Wert des zweiten Rückimpulses sich aus dem um den Wert der ersten der Reihe von Amplituden verringerten Potential ergibt, dann im zweiten Änderungszyklus der Potentialwert analog geändert wird, jedoch der verwendete Amplitudenwert ein anderer der Reihe ist, während die Änderung der Dauer der Anlegung des Potentials auf der nächsten Reihe von Frequenzwerten basiert, in der nächsten Phase dann aufeinanderfolgende Zyklen von Potentialänderungen analog realisiert werden, wobei die zuvor geplante Reihe aus den Werten von Amplitude und Frequenz geschöpft wird, die Intensität des durch den Stromkreis fließenden Stroms jedes Mal am Ende der Dauer der angelegten Werte des Potentials gemessen wird, wobei die Amplitudenwerte aus dem Bereich 5-250 mV und die Frequenzwerte aus dem Bereich 1-1000 Hz ausgewählt werden, und wobei der erste aus diesen Bereichen entnommene Wert vorzugsweise der niedrigste oder höchste ist, die Anzahl der Zyklen zwischen 5 und 1000 liegt, vornehmlich 50 ist und die Bereichsreihenfolge unabhängig voneinander aufsteigend oder absteigend ist.

## Revendications

1. Le procédé de modification de la valeur du potentiel lors de la mesure électrochimique, au cours duquel, dans le premier cycle de modification de la valeur du potentiel ,la première valeur du potentiel formel du système redox testé est appliquée à l'électrode de travail augmentée d'une valeur de la première de la série d'amplitudes, la durée du premier potentiel appliqué résulte de la première de la série de fréquences appliquées, la valeur de la seconde impulsion de retour résulte du potentiel réduit de la valeur de la première de la série d'amplitudes, ensuite au cours du deuxième cycle de modification la valeur du potentiel est modifiée de manière analogue, mais la valeur de l'amplitude utilisée est une autre de la série, tandis que la modification de la durée de l'application du potentiel est basée sur la série suivante de valeurs de fréquence, à l'étape suivante, des cycles successifs de modifications du potentiel sont réalisés de manière analogue en utilisant la série complète de valeurs d'amplitude et de fréquence préalablement planifiées, l'intensité du courant du circuit est mesurée à chaque fois à la fin de la durée des valeurs appliquées du potentiel, dans lequel les valeurs d'amplitude sont sélectionnées dans la plage de 5 à 250 mV et les valeurs de fréquence sont sélectionnées dans la plage 1 à 1 000 Hz, et dans lequel la première valeur prise dans ces plages est de préférence la plus basse ou la plus élevée. Le nombre de cycles est de 5 à 1 000, de préférence 50 et l'ordre de plage est croissant ou décroissant, indépendamment l'un de l'autre.
